# EUROPÄISCHE PATENTSCHRIFT

(11) **EP 3 328 714 B1**
(45) Veröffentlichungstag und Bekanntmachung des Hinweises auf die Patenterteilung: **05.02.2020**
(21) Anmeldenummer: 16751193.0
(22) Anmeldetag: 20.07.2016
(51) Int. Cl.: B62D 15/02, B60C 23/00

(54) **VERFAHREN ZUM ZUMINDEST SEMI-AUTONOMEN MANÖVRIEREN EINES KRAFTFAHRZEUGS MIT BORDSTEINÜBERFAHRT, FAHRERASSISTENZSYSTEM SOWIE KRAFTFAHRZEUG**
METHOD FOR THE AT LEAST SEMI-AUTONOMOUS MANEUVERING OF A MOTOR VEHICLE WITH TRAVEL OVER A CURB, DRIVER ASSISTANCE SYSTEM, AND MOTOR VEHICLE
PROCÉDÉ POUR MANOEUVRER DE FAÇON AU MOINS SEMI-AUTONOME UN VÉHICULE À MOTEUR EN CAS DE MONTÉE SUR UN TROTTOIR, SYSTÈME D'AIDE À LA CONDUITE ET VÉHICULE À MOTEUR

(30) Priorität: 28.07.2015 DE 102015112312
(43) Veröffentlichungstag der Anmeldung: 06.06.2018
(73) Patentinhaber: Valeo Schalter und Sensoren GmbH, 74321 Bietigheim-Bissingen (DE)
(72) Erfinder: AYYAPPAN, Thirumalai Kumarasamy, 74321 Bietigheim-Bissingen (DE)
(74) Vertreter: Pothmann, Karsten
(86) Internationale Anmeldenummer: PCT/EP2016/067300
(87) Internationale Veröffentlichungsnummer: WO 2017/016954

(56) Entgegenhaltungen:
- WO-A1-2012/084502
- DE-A1-102013 220 931
- US-A1- 2015 100 193

## Beschreibung

Die vorliegende Erfindung betrifft ein Verfahren zum zumindest semi-autonomen Manövrieren eines Kraftfahrzeugs, bei welchem mittels eines Sensors eine Parklücke in einem Umgebungsbereich des Kraftfahrzeugs erkannt wird und eine Fahrtrajektorie zum Einparken des Kraftfahrzeugs bestimmt wird, wobei die Fahrtrajektorie derart bestimmt wird, dass das Kraftfahrzeug beim Manövrieren entlang der Fahrtrajektorie unter einem vorbestimmten Winkel über den Bordstein fährt. Zudem betrifft die vorliegende Erfindung ein Fahrerassistenzsystem für ein Kraftfahrzeug. Schließlich betrifft die vorliegende Erfindung ein Kraftfahrzeug mit einem derartigen Fahrerassistenzsystem.

Das Interesse richtet sich vorliegend insbesondere auf Fahrerassistenzsysteme, welche den Fahrer beim Manövrieren des Kraftfahrzeugs und insbesondere beim Einparken des Kraftfahrzeugs in eine Parklücke unterstützen. Aus dem Stand der Technik sind bereits Fahrerassistenzsysteme bekannt, welche mit Hilfe von entsprechenden Sensoren Parklücken beziehungsweise freie Stellplätze erkennen können und den Fahrer beim Einparkvorgang unterstützen. Hierbei kann der Fahrer sowohl beim Längsparken als auch beim Querparken unterstützt werden. Darüber hinaus sind Fahrerassistenzsysteme bekannt, die das Kraftfahrzeug bei einem Einparkvorgang semi-autonom manövrieren. Hierbei übernimmt das Fahrerassistenzsystem die Lenkung des Kraftfahrzeugs und der Fahrer betätigt das Gaspedal und die Bremse. Ferner sind bereits Fahrerassistenzsysteme bekannt, die ein autonomes beziehungsweise vollautonomes Manövrieren des Kraftfahrzeugs ermöglichen.

Des Weiteren sind aus dem Stand der Technik Fahrerassistenzsysteme bekannt, die den Fahrer bei Einparkmanövern unterstützen, bei denen ein Bordstein überfahren wird. Dies ist beispielsweise gegeben, wenn das Kraftfahrzeug beim Einparken derart bewegt wird, dass das zumindest eine Rad des Kraftfahrzeugs über einen Bordstein bewegt wird. Hierbei ist es zudem von Interesse, einen Kontakt des zumindest einen Rades mit dem Bordstein zu erkennen. Zu diesem Zweck kann beispielsweise das mit einem Antriebsmotor bereitgestellte Drehmoment erfasst werden. Anhand einer Veränderung des Drehmoments kann der Kontakt des zumindest einen Rades mit dem Bordstein erkannt werden.

Hierzu beschreibt die DE 10 2009 003 216 A1 ein Fahrerassistenzverfahren, gemäß dem ein Höhenprofil einer Fahrbahnoberfläche entlang einer Radtrajektorie erfasst wird, welches mit einem vorbestimmten Höhenprofil verglichen wird und bei Vorhandensein dieser Merkmale eine vorbestimmte Aktion ausgelöst wird. Wenn sich beispielsweise auf einer vorberechneten Einparktrajektorie ein Bordstein befindet, so kann die Querführung des Kraftfahrzeugs derart verändert werden, dass der Bordstein in einem besonders günstigen Winkel überfahren wird. Ein günstiger Winkel verhindert eine Beschädigung eines Rades, insbesondere einer Felge.

Weiterhin offenbart US 2015/100193 A1 eine Einparkhilfe, welche eine Routeninformationsspeichereinheit umfasst, die im Voraus Routeninformationen speichert, die einen Fahrweg zum Zeitpunkt des Parkens anzeigen. Die Einparkhilfe umfasst eine Neigungsberechnungseinheit, die konfiguriert ist, um eine aktuelle Neigung einer Fahrzeuglängenrichtung des Fahrzeugs in Bezug auf die Zielposition zu berechnen. Weiterhin umfasst die Einparkhilfe eine Führungseinheit, die konfiguriert ist, das Fahrzeug zu der Zielposition zu führen, basierend auf einer Fahrroute, die an die Position angrenzt, an der die Fahrzeuglängsrichtung parallel zur Vorwärtsroute ist. Der nächstliegende Stand der Technik ist in der US 2015/100193 A1 zu sehen.

Es ist Aufgabe der vorliegenden Erfindung, eine Lösung aufzuzeigen, wie ein Kraftfahrzeug bei einer Fahrt über einen Bordstein zuverlässiger manövriert werden kann.

Diese Aufgabe wird erfindungsgemäß durch ein Verfahren, durch ein Fahrerassistenzsystem sowie durch ein Kraftfahrzeug mit den Merkmalen gemäß der jeweiligen unabhängigen Ansprüchen gelöst. Vorteilhafte Ausführungen der Erfindung sind Gegenstand der abhängigen Ansprüche, der Beschreibung und der Figuren.

Ein erfindungsgemäßes Verfahren dient zum zumindest semi-autonomen Manövrieren eines Kraftfahrzeugs. Hierbei wird mittels eines Sensors eine Parklücke in einem Umgebungsbereich des Kraftfahrzeugs erkannt. Zudem wird eine Fahrtrajektorie zum Einparken des Kraftfahrzeugs in die Parklücke bestimmt, wobei die Fahrtrajektorie derart bestimmt wird, dass das Kraftfahrzeug beim Manövrieren entlang der Fahrtrajektorie unter einem bestimmten Winkel über den Bordstein fährt. Ferner ist es vorgesehen, dass die Fahrtrajektorie zusätzlich in Abhängigkeit von einer Anzahl von Einparkzügen, zwischen denen die Fahrtrichtung des Kraftfahrzeugs beim Manövrieren entlang der Fahrtrajektorie geändert wird, bestimmt wird wobei zum Bestimmen der Fahrtrajektorie eine Mehrzahl von Fahrtrajektorien zum Einparken in die Parklücke bestimmt wird und eine der Fahrtrajektorien ausgewählt wird, wobei sich die Mehrzahl von Fahrtrajektorien bezüglich des Winkels, unter dem das Kraftfahrzeug über den Bordstein fährt, und/oder der Anzahl von Einparkzügen unterscheidet, wobei eine erste der Fahrtrajektorie bestimmt wird, bei der das Kraftfahrzeug unter einem ersten Winke über den Bordstein fährt, wobei der erste Winkel ein zum Einparken in die Parklücke maximal möglicher Winkel ist, als eine zweite Fahrtrajektorie eine vorbestimmte Standardtrajektorie für die Parklücke bestimmt wird, bei der das Kraftfahrzeug unter einem zweiten Winkel über den Bordstein fährt, und eine dritte Fahrtrajektorie bestimmt wird, bei der das Kraftfahrzeug unter einem dritten Winkel über den Bordstein fährt, der kleiner als der erste Winkel und größer als der zweite Winkel ist..

Mit Hilfe des Verfahrens soll das Kraftfahrzeug zumindest semi-autonom manövriert werden. Insbesondere dient das Verfahren dazu, den Fahrer beim Einparken in eine Parklücke zu unterstützen. Hierbei wird eine Parklücke anhand von Sensordaten eines Sensors des Kraftfahrzeugs erkannt. Zu diesem Zweck kann das Kraftfahrzeug beispielsweise bewegt werden und mit den Sensoren des Kraftfahrzeugs ein Umgebungsbereich des Kraftfahrzeugs kontinuierlich erfasst werden. Der Sensor des Kraftfahrzeugs kann beispielsweise ein Ultraschallsensor sein, mit dem Objekte in dem Umgebungsbereich erkannt werden können. Insbesondere kann mit dem Sensor ein Abstand zwischen dem Kraftfahrzeug und einem Objekt in dem Umgebungsbereich bestimmt werden. Auf diese Weise können Objekte erkannt werden, die beispielsweise die Parklücke begrenzen. Ferner wird eine aktuelle Position des Kraftfahrzeugs in Bezug auf die erkannte Parklücke bestimmt. Es kann auch eine relative Lage des Kraftfahrzeugs beziehungsweise eines vorbestimmten Bezugspunkts des Kraftfahrzeugs relativ zu der erkannten Parklücke bestimmt werden. Auf Grundlage dieser Informationen kann eine Fahrtrajektorie bestimmt werden, entlang welcher das Kraftfahrzeug zum Einparken in die Parklücke bewegt wird. Das Kraftfahrzeug kann also ausgehend von der aktuellen Position entlang der Fahrtrajektorie in die Parklücke bewegt werden. Hierbei kann das Kraftfahrzeug semi-autonom bewegt werden. In diesem Fall übernimmt beispielsweise ein Fahrerassistenzsystem des Kraftfahrzeugs einen Eingriff in die Lenkung, um das Kraftfahrzeug entlang der Fahrtrajektorie zu bewegen. Der Fahrer des Kraftfahrzeugs betätigt weiterhin das Gaspedal und die Bremse. Es kann auch vorgesehen sein, dass das Kraftfahrzeug autonom beziehungsweise vollautonom entlang der Fahrtrajektorie bewegt wird. In diesem Fall übernimmt das Fahrerassistenzsystem zudem einen Eingriff in einen Antriebsmotor und/oder eine Bremse des Kraftfahrzeugs.

Vorliegend gilt das Interesse insbesondere Einparkvorgängen, bei denen das Kraftfahrzeug über den Bordstein fährt. Hierbei rollt zumindest ein Rad des Kraftfahrzeugs über den Bordstein. Der Bordstein dient insbesondere zur Abgrenzung verschiedener Bereiche der Straße voneinander. Beispielsweise kann eine Fahrbahn von einem anderen Bereich der Straße durch den Bordstein abgegrenzt sein. Ein derartiger Einparkvorgang liegt beispielsweise vor, wenn zumindest ein Rad beim Einparken in die Parklücke über den Bordstein beziehungsweise auf den Bordstein hinauf bewegt wird. Dies ist insbesondere der Fall, wenn sich die Parklücke zumindest bereichsweise auf einem von einer Fahrbahn durch den Bordstein abgegrenzten Bereich befindet.

Vorliegend wird die Fahrtrajektorie derart bestimmt, dass sich ein vorbestimmter Winkel ergibt, unter welchem das Kraftfahrzeug über den Bordstein fährt. Dieser Winkel kann insbesondere der Winkel zwischen einer verlängerten Längsachse und einer Haupterstreckungsrichtung des Bordsteins sein. Dabei kann der Winkel so bestimmt werden, dass dieser möglichst groß gewählt wird, wobei der Winkel unter der Randbedingung bestimmt wird, dass das Kraftfahrzeug in die erkannte Parklücke eingeparkt wird. Dadurch, dass der Winkel möglichst groß gewählt wird, kann eine Beschädigung des Rades des Kraftfahrzeugs und insbesondere einer Felge verhindert werden. Erfindungsgemäß ist es nun vorgesehen, dass die Fahrtrajektorie zusätzlich in Abhängigkeit von einer Anzahl von Einparkzügen bestimmt wird. Die Einparkzüge beschreiben die einzelnen Teilbereiche der Fahrtrajektorie zwischen denen die Fahrtrichtung geändert wird. Beispielsweise kann das Kraftfahrzeug beim Manövrieren entlang der Fahrtrajektorie bei einem ersten Einparkzug rückwärts bewegt werden und bei einem darauffolgenden zweiten Einparkzug vorwärts bewegt werden. Somit kann die Fahrtrajektorie gemäß einem vorbestimmten Optimierungsverfahren bestimmt werden, bei dem einerseits versucht wird, den Winkel zu maximieren und andererseits versucht wird, die Anzahl der Einparkzüge zu minimieren. Damit kann beispielsweise verhindert werden, dass die Fahrtrajektorie derart bestimmt wird, dass der Winkel zwar verhältnismäßig groß gewählt wird, aber das Kraftfahrzeug daher in mehreren Einparkzügen in die Parklücke bewegt wird. Wenn das Kraftfahrzeug in mehreren Einparkzügen bewegt wird, kann es beispielsweise bei einer Parklücke, in der der Bordstein angeordnet ist, der Fall sein, dass das Kraftfahrzeug mehrfach auf den Bordstein hinauf und wieder herunter bewegt werden muss. Dies kann wiederum zu einer ungewollten Belastung oder sogar einer Beschädigung des Rades führen. Damit kann der Fahrer des Kraftfahrzeugs zuverlässig beim Einparken in eine Parklücke mit einem Bordstein unterstützt werden.

Zum Bestimmen der Fahrtrajektorie wird eine Mehrzahl von Fahrtrajektorien zum Einparken in die Parklücke bestimmt und eine der Fahrtrajektorien wird ausgewählt.

Wenn beispielsweise die Parklücke anhand der Sensordaten des zumindest einen Sensors des Kraftfahrzeugs erkannt wurde, können ausgehend von einer Startposition mehrere Fahrtrajektorien berechnet werden. Das Berechnen der Mehrzahl von Fahrtrajektorien kann mit der Steuereinrichtung des Kraftfahrzeugs durchgeführt werden. Hierfür können unterschiedliche Berechnungsalgorithmen bzw. Formeln in der Steuereinrichtung hinterlegt sein. Somit können für die bekannten Abmessungen des Kraftfahrzeugs und in Abhängigkeit von der erkannten Parklücke die Mehrzahl von Fahrtrajektorien innerhalb einer kurzen Rechenzeit bestimmt werden. Anschließend kann eine der Fahrtrajektorien nach einem vorbestimmten Optimierungskriterium ausgewählt werden.

Dabei unterscheidet sich die Mehrzahl von Fahrtrajektorien bezüglich des Winkels, unter dem das Kraftfahrzeug über den Bordstein führt, und/oder der Anzahl von Einparkzügen. Beispielsweise kann die Mehrzahl von Fahrtrajektorien derart bestimmt werden, dass sich diese bezüglich des Winkels, unter dem das Kraftfahrzeug über den Bordstein fährt, unterscheiden. Anschließend kann untersucht werden, wie sich diese Fahrtrajektorien bezüglich der Anzahl von Einparkzügen zueinander unterscheiden. Damit kann auf einfache Weise diejenige Parklücke ausgewählt werden, bei der der Winkel verhältnismäßig groß ist und zudem die Anzahl der Einparkzüge gering ist. Somit kann das Einparken in die Parklücke bzw. das Einparkmanöver innerhalb kurzer Zeit erfolgen und zudem kann erreicht werden, dass die Felge des Kraftfahrzeugs nicht beschädigt wird.

Es wird eine erste Fahrtrajektorie bestimmt, bei der das Kraftfahrzeug unter einem ersten Winkel über den Bordstein fährt, wobei der erste Winkel ein zum Einparken in die Parklücke maximal möglicher Winkel ist, als eine zweite Fahrtrajektorie wird eine vorbestimmte Standardtrajektorie für die Parklücke bestimmt, bei der das Kraftfahrzeug unter einem zweiten Winkel über den Bordstein fährt und eine dritte Fahrtrajektorie wird bestimmt, bei der das Kraftfahrzeug unter einem dritten Winkel über den Bordstein fährt, der kleiner als der erste und größer als der zweite Winkel ist. Die erste Fahrtrajektorie kann so bestimmt werden, dass der Winkel, unter dem das Kraftfahrzeug über den Bordstein fährt, maximiert wird. Die Maximierung des Winkels erfolgt dabei derart, dass das Kraftfahrzeug trotzdem möglicht effizient in die Parklücke eingeparkt werden kann. Hierbei kann beispielsweise eine mögliche Anzahl von Einparkzügen vorgegeben werden. Die drei Fahrtrajektorien können beispielsweise jeweils derart bestimmt werden, dass das Kraftfahrzeug nach dem ersten Einparkzug bereits zumindest teilweise den Bordstein überfahren hat. Beispielsweise können die beiden Räder, die einer Seite des Kraftfahrzeugs zugeordnet sind, den Bordstein nach dem ersten Einparkzug überfahren haben. Die drei Fahrtrajektorien können sich dann bezüglich des Winkels unterscheiden. Die zweite Fahrtrajektorie wird gemäß einer vorbestimmten Standardtrajektorie bzw. eines Standardalgorithmus berechnet, die üblicherweise für Parklücken ohne Bordstein verwendet wird. Die dritte Fahrtrajektorie wird so bestimmt, dass das Kraftfahrzeug unter dem dritten Winkel über den Bordstein fährt, der zwischen dem ersten Winkel der ersten Fahrtrajektorie und dem zweiten Winkel der zweiten Fahrtrajektorie liegt. Grundsätzlich kann es auch vorgesehen sein, dass mehr als drei Fahrtrajektorien vorgegeben werden.

Insbesondere ist es vorgesehen, dass die dritte Fahrtrajektorie derart bestimmt wird, dass der dritte Winkel einem Mittelwert aus dem ersten Winkel und dem zweiten Winkel entspricht. Die erste Fahrtrajektorie kann so vorgegeben werden, dass der Winkel zum Einparken in die Parklücke maximal gewählt wird. Die zweite Fahrtrajektorie kann gemäß dem Standardalgorithmus berechnet werden. Die zweite Fahrtrajektorie kann dann derart bestimmt werden, dass der zweite Winkel dem Mittelwert aus dem ersten und dem dritten Winkel entspricht. Somit kann die dritte Fahrtrajektorie innerhalb einer geringen Rechenzeit bestimmt werden. Weiterhin ist es vorteilhaft, wenn für die erste, die zweite und die dritte Fahrtrajektorie jeweils eine Anzahl der Einparkzüge bestimmt wird und eine der Fahrtrajektorien in Abhängigkeit von der bestimmten Anzahl der Einparkzüge ausgewählt wird. Hierbei kann es beispielsweise vorgesehen sein, dass diejenige der Fahrtrajektorien ausgewählt wird, die die geringste Anzahl an Einparkzügen aufweist. Somit kann beispielsweise erreicht werden, dass das Einparkmanöver innerhalb einer kurzen Zeit durchgeführt werden kann und somit der Verkehr nicht unnötig behindert wird.

In einer weiteren Ausgestaltung wird die erste Fahrtrajektorie ausgewählt, falls die erste Fahrtrajektorie maximal einen Einparkzug mehr als diejenige der Fahrtrajektorien mit einer geringsten Anzahl an Einparkzügen aufweist. Mit anderen Worten wird die erste Fahrtrajektorie ausgewählt falls die Anzahl der Einparkzüge maximal um den Wert eins größer ist als die Anzahl der Einparkzüge der Fahrtrajektorie mit der geringsten Anzahl an Einparkzügen. Somit kann einerseits erreicht werden, dass das Rad des Kraftfahrzeugs nicht beschädigt wird und die Dauer des Einparkvorgangs durch die Auswahl der ersten Fahrtrajektorie nicht unnötig verlängert wird.

In einer weiteren Ausgestaltung wird die dritte Fahrtrajektorie ausgewählt, falls die dritte Fahrtrajektorie maximal einen Einparkzug mehr als diejenige der Fahrtrajektorien mit der geringsten Anzahl an Einparkzügen aufweist und die erste Fahrtrajektorie nicht ausgewählt wird. Mit anderen Worten wird die dritte Fahrtrajektorie ausgewählt, falls diese maximal einen Einparkzug mehr als die zweite Fahrtrajektorie aufweist. Dabei ist es insbesondere vorgesehen, dass die dritte Fahrtrajektorie nur dann ausgewählt wird, falls die erste Fahrtrajektorie nicht ausgewählt wurde. Die dritte Fahrtrajektorie kann beispielsweise ausgewählt werden, wenn sich für die erste Fahrtrajektorie eine verhältnismäßig hohe Anzahl an Einparkzügen ergibt.

In einer weiteren Ausführungsform wird die zweite Fahrtrajektorie ausgewählt, falls die erste Fahrtrajektorie und die dritte Fahrtrajektorie nicht ausgewählt werden. Dies ist beispielsweise der Fall, wenn sich für die erste und die dritte Fahrtrajektorie eine verhältnismäßig hohe Anzahl an Einparkzügen ergibt. In diesem Fall wird das Kraftfahrzeug gemäß einer üblicherweise verwendeten Fahrtrajektorie bzw. der Standardfahrtrajektorie in die Parklücke eingeparkt.

Ein erfindungsgemäßes Fahrerassistenzsystem für ein Kraftfahrzeug ist zum Durchführen eines erfindungsgemäßen Verfahrens ausgelegt. Bevorzugt umfasst das Fahrerassistenzsystem einen Sensor, insbesondere einen Ultraschallsensor, mit dem Objekte in dem Umgebungsbereich des Kraftfahrzeugs erfasst werden können. Der zumindest eine Sensor kann auch als Kamera, Radarsensor, Lidar-Sensor oder dergleichen ausgebildet sein. Zudem kann das Fahrerassistenzsystem eine entsprechende Steuereinrichtung, beispielsweise ein elektronisches Steuergerät des Kraftfahrzeugs, umfassen. Mit der Steuereinrichtung kann anhand der Sensordaten, die von dem Sensor bereitgestellt werden, die Parklücke erkannt werden. Zudem kann mittels der Steuereinrichtung die Fahrtrajektorie bestimmt werden.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäß einer Ausführungsform der vorliegenden Erfindung, welches ein Fahrerassistenzsystem aufweist;
- Fig. 2: das Kraftfahrzeug gemäß Fig. 1, welches in eine Parklücke entlang einer ersten Fahrtrajektorie eingeparkt wird;
- Fig. 3: das Kraftfahrzeug gemäß Fig. 1, welches in die Parklücke entlang einer zweiten Fahrtrajektorie eingeparkt wird;
- Fig. 4: ein schematisches Ablaufdiagramm eines Verfahrens zum zumindest semiautonomen Manövrieren des Kraftfahrzeugs; und
- Fig. 5: ein schematisches Ablaufdiagramm des Verfahrens zum zumindest semiautonomen Manövrieren des Kraftfahrzeugs in einer weiteren Ausführungsform.

In den Figuren werden gleiche und funktionsgleiche Elemente mit den gleichen Bezugszeichen versehen.

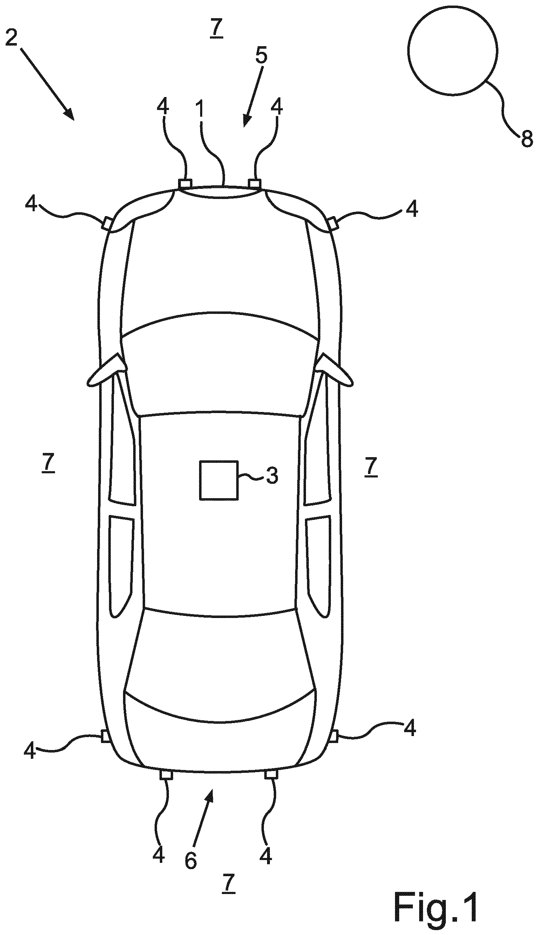

Fig. 1 zeigt ein Kraftfahrzeug 1 gemäß einer Ausführungsform der vorliegenden Erfindung in einer Draufsicht. Das Kraftfahrzeug 1 ist in dem vorliegenden Fall als Personenkraftwagen ausgebildet. Das Kraftfahrzeug 1 umfasst ein Fahrerassistenzsystem 2. Das Fahrerassistenzsystem 2 umfasst wiederum eine Steuereinrichtung 3, welche beispielsweise durch ein elektronisches Steuergerät (ECU - Electronic Control Unit) des Kraftfahrzeugs 1 gebildet sein kann. Darüber hinaus umfasst das Fahrerassistenzsystem 2 zumindest einen Sensor 4.

Vorliegend umfasst das Fahrerassistenzsystem 2 acht Sensoren 4, die jeweils als Ultraschallsensoren ausgebildet sind. Dabei sind vier Sensoren 4 an einem Frontbereich 5 des Kraftfahrzeugs 1 und vier Sensoren 4 an einem Heckbereich 6 des Kraftfahrzeugs 1 angeordnet. Die Sensoren 4 sind dazu ausgebildet, zumindest ein Objekt 8 in einem Umgebungsbereich 7 des Kraftfahrzeugs 1 zu erfassen. Die Sensoren 4 dienen insbesondere dazu, eine relative Lage zwischen dem Objekt 8 und dem Kraftfahrzeug 1 zu bestimmen. Die Sensoren 4 können beispielsweise an entsprechenden Durchgangsöffnungen in den Stoßfängern des Kraftfahrzeugs 1 angeordnet sein. Es kann auch vorgesehen sein, dass die Sensoren 4 verdeckt hinter den Stoßfängern angeordnet sind.

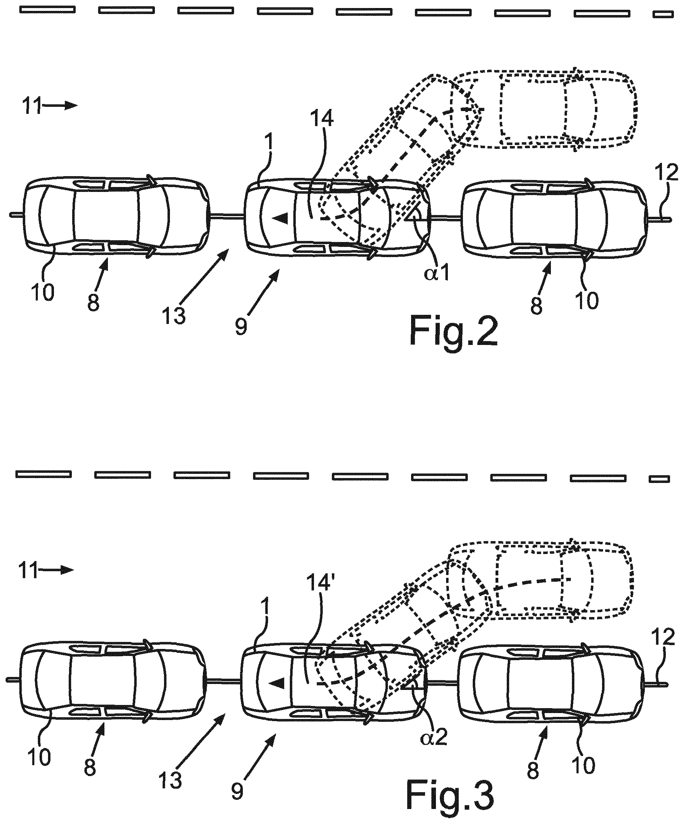

Fig. 2 zeigt das Kraftfahrzeug 1, welches in eine Parklücke 9 eingeparkt wird. Die Parklücke 9 ist vorliegend durch zwei weitere Fahrzeuge 10 begrenzt. Zum Erkennen der Parklücke kann das Kraftfahrzeug 1 beispielsweise auf einer Fahrbahn 11 an den Fahrzeugen 10 vorbei bewegt werden. Während der Bewegung des Kraftfahrzeugs 1 kann mit den Sensoren 4 fortlaufend der Umgebungsbereich 7 des Kraftfahrzeugs 1 erfasst werden und hierbei als Objekte 8 die weiteren Fahrzeuge 10 erkannt werden. Hierbei kann der freie Raum zwischen den weiteren Fahrzeugen 10 vermessen werden und somit als Parklücke 9 erkannt werden. Ausgehend von einer aktuellen Position des Kraftfahrzeugs 1 kann eine erste Fahrtrajektorie 14 bestimmt werden, entlang welcher das Kraftfahrzeug 1 in die Parklücke 9 bewegt wird.

Die Bewegung des Kraftfahrzeugs 1 entlang der ersten Fahrtrajektorie 14 ist vorliegend schematisch dargestellt. Vorliegend wird das Kraftfahrzeug 1 rückwärts in die Parklücke 9 bewegt. Die Parklücke 9 ist vorliegend zum Längsparken ausgelegt. Hierbei kann es vorgesehen sein, dass das Kraftfahrzeug 1 semi-autonom entlang der Fahrtrajektorie 14 manövriert wird. In diesem Fall übernimmt das Fahrerassistenzsystem 2 einen Eingriff in die Lenkung des Kraftfahrzeugs 1. Der Fahrer des Kraftfahrzeugs 1 betätigt weiterhin das Gaspedal und die Bremse. Es kann auch vorgesehen sein, dass das Kraftfahrzeug 1 vollautonom in die Parklücke 9 manövriert wird. Hierbei greift das Fahrerassistenzsystem 2 zusätzlich in einen Antriebsmotor und eine Bremse des Kraftfahrzeugs 1 ein.

Vorliegend befindet sich innerhalb der Parklücke 9 ein Bordstein 12, über den das Kraftfahrzeug 1 beim Einparken in die Parklücke 9 fährt. Die Parklücke 9 ist somit teilweise einem Bereich 13 zugeordnet, der von der Fahrbahn 11 durch den Bordstein 12 getrennt ist. Beispielsweise kann dieser Bereich 13 erhöht im Vergleich zu der Fahrbahn 11 angeordnet sein. Bei dem Bewegen des Kraftfahrzeugs 1 entlang der Fahrtrajektorie 14 wird zunächst das hintere rechte Rad und anschließend das vordere rechte Rad des Kraftfahrzeugs 1 über den Bordstein 12 bewegt.

Bei dem Ausführungsbeispiel von Fig. 2 ist die erste Fahrtrajektorie 14 derart gewählt, dass das Kraftfahrzeug 1 unter einem ersten Winkel α1 über den Bordstein 12 rollt. Dieser erste Winkel α1 ist derart bestimmt, dass dieser zum Einparken des Kraftfahrzeugs 1 in die Parklücke 9 maximiert ist. Beispielsweise kann der erste Winkel α1 größer als 30° sein. Somit kann eine Beschädigung des Rades und insbesondere der Felge beim Rollen über den Bordstein 12 verhindert werden.

Im Vergleich hierzu zeigt Fig. 3 das Kraftfahrzeug 1, das entlang einer zweiten Fahrtrajektorie 14' in die Parklücke 9 eingeparkt wird. Die zweite Fahrtrajektorie 14' entspricht einer Standardtrajektorie, die üblicherweise für Parklücken ohne Bordstein 12 verwendet wird. In diesem Fall rollt das Kraftfahrzeug 1 unter einem zweiten Winkel α2 über den Bordstein 12. Der zweite Winkel α2 ist im Vergleich zum ersten Winkel α1 kleiner.

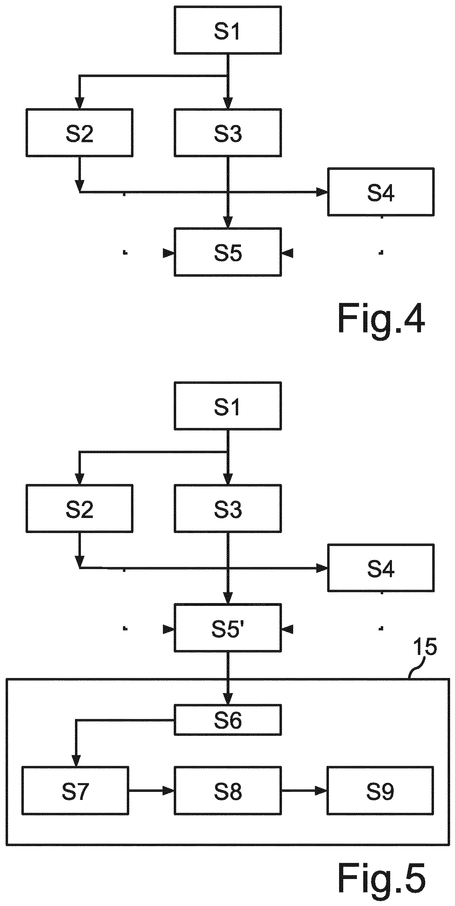

Fig. 4 zeigt ein schematisches Ablaufdiagramm eines Verfahrens zum zumindest semi-autonomen Manövrieren des Kraftfahrzeugs 1. Das Verfahren dient insbesondere dazu, eine Fahrtrajektorie 14, 14' zum Einparken des Kraftfahrzeugs 1 in die Parklücke 9 zu bestimmen. In einem Schritt S1 des Verfahrens wird die Parklücke 9 erkannt. Zu diesem Zweck kann die Steuereinrichtung 3 die Sensordaten, die mit den Sensoren 4 bereitgestellt werden, entsprechend auswerten. Dabei können die weiteren Fahrzeuge 10 anhand der Sensordaten erkannt werden. Zudem kann anhand der Sensordaten der Bordstein 12 innerhalb der Parklücke 9 erkannt werden. Die Position der weiteren Fahrzeuge 10 und/oder des Bordsteins 12 kann beispielsweise in einer digitalen Umgebungskarte des Kraftfahrzeugs 1 eingetragen werden. Zudem kann eine aktuelle Position des Kraftfahrzeugs 1 auf der Fahrbahn 11 bestimmt werden. Die aktuelle Position des Kraftfahrzeugs 1 stellt die Startposition zum Einparken in die Parklücke 9 dar.

In einem Schritt S2 wird die erste Fahrtrajektorie 14 bestimmt. Die erste Fahrtrajektorie 14 entspricht der Fahrtrajektorie, die in Fig. 2 dargestellt ist. Die erste Fahrtrajektorie 14 ist derart bestimmt, dass das Kraftfahrzeug 1 unter dem ersten α1 über den Bordstein 12 rollt. Ferner werden die Einparkzüge für die erste Fahrtrajektorie 14 bestimmt. Die Einparkzüge beschreiben die einzelnen Bereiche der Fahrtrajektorie 14, zwischen denen die Fahrtrichtung, beispielweise zwischen einer Rückwärtsfahrt und einer Vorwärtsfahrt, gewechselt wird.

In einem Schritt S3 wird die zweite Fahrtrajektorie 14' bestimmt. Die zweite Fahrtrajektorie 14' entspricht der Standardtrajektorie gemäß Fig. 3. Auch hier wird die Anzahl der Einparkzüge für die zweite Fahrtrajektorie 14' bestimmt. Darüber hinaus wird in einem Schritt S4 eine dritte Fahrtrajektorie zum Einparken des Kraftfahrzeugs 1 in die Parklücke 9 bestimmt, wobei die dritte Fahrtrajektorie derart bestimmt wird, dass das Kraftfahrzeug unter einem dritten Winkel über den Bordstein 12 rollt, wobei der dritte Winkel beispielsweise dem Mittelwert aus dem ersten Winkel α1 und dem zweiten Winkel α2 entsprechen kann. In einem Schritt S5 wird dann diejenige der Fahrtrajektorien 14, 14' ausgewählt, die die niedrigste Anzahl an Einparkzügen aufweist.

Fig. 5 zeigt ein Verfahren zum zumindest semi-autonomem Manövrieren des Kraftfahrzeugs 1 in einer weiteren Ausführungsform. Dabei entsprechen die Schritte S1 bis S4 den Schritten gemäß dem Verfahren, das in Fig. 4 dargestellt ist. Hierbei wird in einem Schritt S5' aber diejenige der Fahrtrajektorien 14, 14' ausgewählt, die die höchste Priorität aufweist. Hierzu wird in einem Block 15 eine Priorisierung der Fahrtrajektorien 14, 14' durchgeführt. Ein Schritt S6 dient dazu, die Priorität auszuwählen. Hierbei wird in einem Schritt S7 der ersten Fahrtrajektorie 14 eine erste Priorität zugeordnet, wenn die Anzahl der Einparkzüge der ersten Fahrtrajektorie 14 die Anzahl der Einparkzüge derjenigen Fahrtrajektorie mit der geringsten Anzahl an Einparkzügen maximal um den Wert eins überschreitet. Ist dies der Fall, wird die erste Fahrtrajektorie 14 ausgewählt. Ist dies nicht erfüllt, wird das Verfahren in einem Schritt S8 fortgeführt.

In dem Schritt S8 wird der dritten Fahrtrajektorie eine zweite Priorität zugewiesen, falls die Anzahl der Einparkzüge der dritten Fahrtrajektorie die Anzahl der Einparkzüge derjenigen Fahrtrajektorie mit der niedrigsten Anzahl an Einparkzügen maximal um den Wert eins überschreitet. Ist dies erfüllt, wird die dritte Fahrtrajektorie ausgewählt. Ist dieses Kriterium nicht erfüllt, wird das Verfahren in dem Schritt S9 fortgeführt. Hierbei wird die Fahrtrajektorie 14, 14' mit der geringsten Anzahl an Einparkzügen ausgewählt. Insbesondere kann hierbei die zweite Fahrtrajektorie 14' ausgewählt werden.

## Patentansprüche

1. Verfahren zum zumindest semi-autonomen Manövrieren eines Kraftfahrzeugs (1), bei welchem mittels eines Sensors (4) eine Parklücke (9) in einem Umgebungsbereich (7) des Kraftfahrzeugs (1) erkannt wird (S1) und eine Fahrtrajektorie (14, 14') zum Einparken des Kraftfahrzeugs (1) in die Parklücke (9) bestimmt wird, wobei die Fahrtrajektorie (14, 14') derart bestimmt wird, dass das Kraftfahrzeug (1) beim Manövrieren entlang der Fahrtrajektorie (14, 14') unter einem bestimmten Winkel (α1, α2) über einen Bordstein fährt,
wobei die Fahrtrajektorie (14, 14') zusätzlich in Abhängigkeit von einer Anzahl von Einparkzügen, zwischen denen die Fahrtrichtung des Kraftfahrzeugs (1) beim Manövrieren entlang der Fahrtrajektorie (14, 14') geändert wird, bestimmt wird, wobei zum Bestimmen der Fahrtrajektorie (14, 14') eine Mehrzahl von Fahrtrajektorien (14, 14') zum Einparken in die Parklücke (9) bestimmt wird (S2, S3, S4) und eine der Fahrtrajektorien (14, 14') ausgewählt wird (S5),
wobei sich die Mehrzahl von Fahrtrajektorien (14, 14') bezüglich des Winkels (α1, α2), unter dem das Kraftfahrzeug (1) über den Bordstein (12) fährt, und/oder der Anzahl von Einparkzügen unterscheidet,
**dadurch gekennzeichnet, dass**
eine erste der Fahrtrajektorie (14) bestimmt wird, bei der das Kraftfahrzeug (1) unter einem ersten Winkel (α1) über den Bordstein (12) fährt, wobei der erste Winkel (α1) ein zum Einparken in die Parklücke (9) maximal möglicher Winkel ist, als eine zweite Fahrtrajektorie (14') eine vorbestimmte Standardtrajektorie für die Parklücke (9) bestimmt wird, bei der das Kraftfahrzeug (1) unter einem zweiten Winkel (α2) über den Bordstein (12) fährt, und eine dritte Fahrtrajektorie bestimmt wird, bei der das Kraftfahrzeug (1) unter einem dritten Winkel über den Bordstein (12) fährt, der kleiner als der erste Winkel (α1) und größer als der zweite Winkel (α2) ist.

2. Verfahren nach Anspruch 1,
**dadurch gekennzeichnet, dass**
die dritte Fahrtrajektorie derart bestimmt wird, dass der dritte Winkel einem Mittelwert aus dem ersten Winkel (α1) und dem zweiten Winkel (α2) entspricht.

3. Verfahren nach Anspruch 1 oder 2,
**dadurch gekennzeichnet, dass**
für die erste Fahrtrajektorie (14), die zweite Fahrtrajektorie (14') und die dritte Fahrtrajektorie jeweils eine Anzahl der Einparkzüge bestimmt wird und eine der Fahrtrajektorien (14, 14') in Abgängigkeit von der bestimmen Anzahl von Einparkzügen ausgewählt wird.

4. Verfahren nach einem der Ansprüche1 bis 3,
**dadurch gekennzeichnet, dass**
die erste Fahrtrajektorie (14) ausgewählt wird, falls die erste Fahrtrajektorie (14) maximal einen Einparkzug mehr als diejenigen der Fahrtrajektorien (14, 14') mit einer geringsten Anzahl an Einparkzügen aufweist (S7).

5. Verfahren nach einem der Ansprüche 1 bis 4,
**dadurch gekennzeichnet, dass**
die dritte Fahrtrajektorie ausgewählt wird, falls die dritte Fahrtrajektorie maximal einen Einparkzug mehr als diejenigen der Fahrtrajektorien (14, 14') mit einer geringsten Anzahl an Einparkzügen aufweist und die erste Fahrtrajektorie (14) nicht ausgewählt wird (S8).

6. Verfahren nach einem der Ansprüche 1 bis 5,
**dadurch gekennzeichnet, dass**
die zweite Fahrtrajektorie (14') ausgewählt wird, falls die erste Fahrtrajektorie (14) und die dritte Fahrtrajektorie nicht ausgewählt werden (S9).

7. Fahrerassistenzsystem (2) für ein Kraftfahrzeug (1), welches zum Durchführen eines Verfahrens nach einem der vorhergehenden Ansprüche ausgelegt ist.

8. Kraftfahrzeug (1) mit einem Fahrerassistenzsystem (2) nach Anspruch 7.

## Claims

1. Method for the at least semi-autonomous manoeuvring of a motor vehicle (1), in which a parking space (9) in an area (7) surrounding the motor vehicle (1) is detected (S1) by means of a sensor (4), and a travel trajectory (14, 14') for parking the motor vehicle (1) in the parking space (9) is determined, wherein the travel trajectory (14, 14') is determined in such a way that when manoeuvring along the travel trajectory (14, 14') the motor vehicle (1) travels over a kerbstone at a determined angle (α1, α2), wherein the travel trajectory (14, 14') is additionally determined depending on a number of parking movements between which the travel direction of the motor vehicle (1) is changed during the manoeuvring along the travel trajectory (14, 14'), wherein, in order to determine the travel trajectory (14, 14'), a multiplicity of travel trajectories (14, 14') are determined (S2, S3, S4) for parking in the parking space (9), and one of the travel trajectories (14, 14') is selected (S5), wherein the multiplicity of travel trajectories (14, 14') differs with respect to the angle (α1, α2) at which the motor vehicle (1) travels over the kerbstone (12) and/or the number of parking movements, **characterized in that**
a first of the travel trajectories (14) is determined in which the motor vehicle (1) travels at a first angle (α1) over the kerbstone (12), wherein the first angle (α1) is a maximum possible angle for parking in the parking space (9), a predetermined standard trajectory is determined as a second travel trajectory (14') for the parking space (9), in which trajectory the motor vehicle (1) travels at a second angle (α2) over the kerbstone (12), and a third travel trajectory is determined in which the motor vehicle (1) travels at a third angle over the kerbstone (12), which angle is smaller than the first angle (α1) and larger than the second angle (α2).

2. Method according to Claim 1,
**characterized in that**
the third travel trajectory is determined in such a way that the third angle corresponds to a mean value of the first angle (α1) and the second angle (α2).

3. Method according to Claim 1 or 2,
**characterized in that**
a number of parking movements is respectively determined for the first travel trajectory (14), the second travel trajectory (14') and the third travel trajectory, and one of the travel trajectories (14, 14') is selected depending on the determined number of parking movements.

4. Method according to one of Claims 1 to 3,
**characterized in that**
the first travel trajectory (14) is selected if the first travel trajectory (14) has at maximum one parking movement more than those of the travel trajectories (14, 14') with a smallest number of parking movements (S7).

5. Method according to one of Claims 1 to 4,
**characterized in that**
the third travel trajectory is selected if the third travel trajectory has at maximum one parking movement more than those of the travel trajectories (14, 14') with a smallest number of parking movements, and the first travel trajectory (14) is not selected (S8).

6. Method according to one of Claims 1 to 5,
**characterized in that**
the second travel trajectory (14') is selected if the first travel trajectory (14) and the third travel trajectory are not selected (S9).

7. Driver assistance system (2) for a motor vehicle (1) which is configured to carry out a method according to one of the preceding claims.

8. Motor vehicle (1) having a driver assistance system (2) according to Claim 7.

## Revendications

1. Procédé pour manœuvrer de façon au moins semi-autonome un véhicule à moteur (1), dans lequel on détecte (S1) au moyen d'un capteur (4) un créneau de stationnement (9) dans une zone environnante (7) du véhicule à moteur (1) et on détermine une trajectoire de roulage (14, 14') pour stationner le véhicule à moteur (1) dans le créneau de stationnement (9), dans lequel on détermine la trajectoire de roulage (14, 14') de telle manière que le véhicule à moteur (1) monte sur un trottoir sous un angle déterminé (α1, α2) lors de la manœuvre le long de la trajectoire de roulage (14, 14'), dans lequel on détermine la trajectoire de roulage (14, 14') en outre en fonction d'un nombre de mouvements de stationnement, entre lesquels la direction de roulage du véhicule à moteur (1) change lors de la manœuvre le long de la trajectoire de roulage (14, 14'),
dans lequel on détermine (S2, S3, S4) pour la détermination de la trajectoire de roulage (14, 14') une multiplicité de trajectoires de roulage (14, 14') pour le stationnement dans le créneau (9) et on choisit (S5) une des trajectoires de roulage (14, 14'),
dans lequel la multiplicité de trajectoires de roulage (14, 14') diffère du point de vue de l'angle (α1, α2), sous lequel le véhicule à moteur (1) monte sur le trottoir (12), et/ou du nombre de mouvements de stationnement, **caractérisé en ce que** l'on détermine une première trajectoire de roulage (14), dans laquelle le véhicule à moteur (1) monte sur le trottoir (12) sous un premier angle (α1), dans lequel le premier angle (α1) est l'angle maximum possible pour le stationnement dans le créneau (9), on détermine comme une deuxième trajectoire de roulage (14') une trajectoire standard prédéterminée pour le créneau (9), dans laquelle le véhicule à moteur (1) monte sur le trottoir (12) sous un deuxième angle (α2), et on détermine une troisième trajectoire de roulage, dans laquelle le véhicule à moteur (1) monte sur le trottoir (12) sous un troisième angle, qui est plus petit que le premier angle (α1) et plus grand que le deuxième angle (α2).

2. Procédé selon la revendication 1, **caractérisé en ce que** l'on détermine la troisième trajectoire de roulage de telle manière que le troisième angle corresponde à une valeur moyenne entre le premier angle (α1) et le deuxième angle (α2).

3. Procédé selon une revendication 1 ou 2, **caractérisé en ce que** l'on détermine pour la première trajectoire de roulage (14), la deuxième trajectoire de roulage (14') et la troisième trajectoire de roulage chaque fois un nombre de mouvements de stationnement et on choisit une des trajectoires de roulage (14, 14') en fonction du nombre déterminé de mouvements de stationnement.

4. Procédé selon l'une quelconque des revendications 1 à 3, **caractérisé en ce que** l'on choisit (S7) la première trajectoire de roulage (14), dans le cas où la première trajectoire de roulage (14) présente au maximum un mouvement de stationnement de plus que celles des trajectoires de roulage (14, 14') ayant le plus petit nombre de mouvements de stationnement.

5. Procédé selon l'une quelconque des revendications 1 à 4, **caractérisé en ce que** l'on choisit (S8) la troisième trajectoire de roulage, dans le cas où la troisième trajectoire de roulage présente au maximum un mouvement de stationnement de plus que celles des trajectoires de roulage (14, 14') ayant le plus petit nombre de mouvements de stationnement et où l'on ne choisit pas la première trajectoire de roulage (14).

6. Procédé selon l'une quelconque des revendications 1 à 5, **caractérisé en ce que** l'on choisit (S9) la deuxième trajectoire (14'), dans le cas où l'on ne choisit pas la première trajectoire de roulage (14) et la troisième trajectoire de roulage.

7. Système d'assistance au conducteur (2) pour un véhicule à moteur (1), qui est conçu pour exécuter un procédé selon l'une quelconque des revendications précédentes.

8. Véhicule à moteur (1), doté d'un système d'assistance au conducteur (2) selon la revendication 7.
